Europäisches Patentamt

European Patent Office

Office européen des brevets

(11) Veröffentlichungsnummer: **0 263 382**
**A2**

(12) **EUROPÄISCHE PATENTANMELDUNG**

(21) Anmeldenummer: **87114069.5**

(51) Int. Cl.4: **A23L 1/04**

(22) Anmeldetag: **25.09.87**

(30) Priorität: **10.10.86 DE 3634645**

(43) Veröffentlichungstag der Anmeldung:
**13.04.88 Patentblatt 88/15**

(84) Benannte Vertragsstaaten:
**AT BE CH ES FR GB GR IT LI LU NL SE**

(71) Anmelder: **Diamalt Aktiengesellschaft**
**Friedrichstrasse 18**
**D-8000 München(DE)**

(72) Erfinder: **Bayerlein, Friedrich, Dr.**
**Schwalbenweg 7**
**D-8033 Krailling(DE)**
Erfinder: **Keramaris, Nikolaos, Dr.**
**Amselweg 2**
**D-8031 Eichenau(DE)**
Erfinder: **Kottmair, Nikolaus, Dr.**
**Elisabethstrasse 5**
**D-8031 Gauting(DE)**
Erfinder: **Kuhn, Manfred, Dr.**
**Hornstrasse 22**
**D-8000 München 40(DE)**
Erfinder: **Maton, Michel M.**
**39, avenue Clarisse**
**F-92420 Vaucresson(FR)**

(74) Vertreter: **Lederer, Franz, Dr. et al**
**Van der Werth, Lederer & Riederer**
**Patentanwälte Lucile-Grahn-Strasse 22**
**D-8000 München 80(DE)**

(54) Verfahren zur Herstellung von farblosem, geruchs- und geschmacksneutralem Cassia-Endosperm-Mehl.

(57) Es wird ein Verfahren zur Herstellung von farblosem, geruchs-und geschmacksneutralem Cassia-Endosperm-Mehl offenbart, bei dem das Endosperm ganz oder in zerkleinertem Zustand mit einem Gemisch aus a) Wasser und b) Alkanol und/oder Aceton mindestens einmal extrahiert wird.

EP 0 263 382 A2

## Verfahren zur Herstellung von farblosem, geruchs-und geschmacksneutralem Cassia-Endosperm-Mehl

Die vorliegende Erfindung betrifft ein Verfahren zur Herstellung von Mehl aus dem Endosperm von Cassia, das sich als ein vorzügliches Gelier-und Verdickungsmittel für wäßrige Systeme, insbesondere im Nahrungsmittel-und Futtermittelbereich bewährt hat. Unter Gelier-und Verdickungsmitteln versteht man Stoffe, die beispielsweise Wasser oder wäßrigen Behandlungsflüssigkeiten oder festen oder flüssigen Lebens-bzw. Futtermitteln während des Herstellungs-und Verarbeitungsprozesses zugesetzt werden, um eine gewünschte Konsistenz oder Viskosität zu erzielen. Gerade in dem Nahrungsmittelbereich zeichnet sich das Mehl aus dem Endosperm von Cassia durch seine gelbildende Wechselwirkung mit anderen Hydrokolloiden, durch hohe Wirksamkeit und besonders niedrige Einsatzkonzentration aus.

In der DE-OS 33 35 593 werden Gelier-und Verdickungsmittel auf der Basis von Cassia-Galaktomannanen, die eine synergistische Mischung aus Cassia-Galaktomannan und Carrageenan, Agar und/oder Xanthan enthalten, beschrieben.

Die DE-OS 33 47 469 beschreibt substituierte Alkylether von Polysacchariden, die im Endosperm von Cassia tora vorkommen und deren Verwendung als Verdickungsmittel in Druckpasten für den Textildruck.

Aus den Samen von Cassia tora bzw. deren Synonyma, z.B. Cassia obtusifolia wird durch Hitzebehandlung der reifen Samen und anschließende Schlagvermahlung, die zur Ablösung des Keimlings und der Schale vom Endosperm führt, das Cassia-Mehl gewonnen. Anschließend wird das vom Keimling und Schalenteilen durch Sichten befreite Endosperm einer vermahlenden Behandlung unterworfen. Man gelangt so zu einem Cassia-Endosperm-Mehl mit einer durchschnittlichen Zusammensetzung von:

Wasser:          3 - 12 %
Fett:            bis 1 %
Rohprotein       bis 7 %
Rohfaser:        bis 4 %
Asche:           bis 2%
Rest-Polysaccharid:    mind. 75%

Das auf diese Weise gewonnene Cassia-Endosperm-Mehl weist zwar die erwünschte Gelierfähigkeit auf, jedoch haftet ihm ein spezifischer fruchtiger Geruch und ein leicht bitterer Geschmack an. Darüber hinaus weist das so erhaltene Mehl eine gelbe bis braune Farbe auf, so daß seine Verwendung bei der Herstellung qualitativ hochwertiger Produkte nur begrenzt möglich ist.

Bei dem in der DE-OS 31 14 783 beschriebenen Verfahren zur Herstellung von geschmacksverbessertem Johannisbrotschoten-, Johannisbrotkern-oder Guarmehl werden die getrockneten, gegebenenfalls getoasteten und gemahlenen Ausgangsstoffe einer Hochdruckextraktion mit überkritischem $CO_2$ unterworfen. Die Anwendung des dort beschriebenen Verfahrens führt jedoch bei Cassia-Mehl zu mangelhaften Ergebnissen.

Weder durch Selektion noch durch selektierende Vermahlung und andere mechanische Reinigungsverfahren ist es bisher gelungen, unter Erhaltung der synergistischen Gelierfähigkeit ein Cassia-Mehl herzustellen, das praktisch farblos, geruchs-und geschmacksneutral und weitgehend frei von anthrachinoiden Begleitstoffen ist. Deshalb ist es als Zusatz für sensorisch anspruchsvolle Nahrungmittel hoher Qualitäten nicht geeignet.

In vielen Bereichen der modernen Lebensmitteltechnologie ist est erwünscht, Nahrungsmitteln durch geeignete Zusätze eine gelartige Konsistenz zu verleihen. Diese Zusätze dürfen dabei natürlich das Produkt weder in geschmacklicher noch farblicher Hinsicht beeinträchtigen, da dies zu Produkten führen kann, die von dem Konsumenten nicht mehr akzeptiert werden. Ein Eigengeruch des Gelierungsmittels führt ebenfalls zu einer Beschränkung der Anwendbarkeit, da Produkte, die einen artfremden Geruch aufweisen, ebenfalls häufig von den Endverbrauchern nicht akzeptiert werden.

Aufgabe der vorliegenden Erfindung ist es daher, ein Verfahren zur Herstellung von Cassia-Endosperm-Mehl, das farblos, geruchs-und geschmacksneutral ist, bereitzustellen.

Gegenstand der vorliegenden Erfindung ist ein Verfahren zur Herstellung eines Cassia-Endosperm-Mehls aus dem Endosperm von Cassia tora/syn. obtusifolia, von hoher synergistischer Gelierfähigkeit mit Carrageenan, Xanthan und/oder Polyacrylaten, das praktisch farblos, geruchs-und geschmacksneutral ist, das dadurch gekennzeichnet ist, daß man das Endosperm entweder ganz oder in zerkleinertem Zustand mit einem Gemisch aus a) Wasser und b) Alkanol und/oder Aceton mindestens einmal extrahiert und nach Trocknung auf die gewünschte Feinheit einstellt.

Dabei werden die unerwünschten Inhaltsstoffe des unbehandelten Cassia-Endosperm-Mehls in die Extraktionsflüssigkeit überführt, während Cassia-Endosperm-Mehl nach der Extraktion zurückbleibt, das die gewünschten Eigenschaften aufweist.

Bevorzugte Alkanole sind Ethanol, Isopropanol und Propanol. Die erfindungsgemäße Extraktion wird mindestens einmal, bevorzugt zweimal und besonders bevorzugt dreimal durchgeführt, wobei der Wassergehalt der Extraktionsflüssigkeit im allgemeinen zwischen 5 und 90 % beträgt. Bei der bevorzugten wiederholten Extraktion wird der Wassergehalt im Laufe der Extraktionen sukzessive abgesenkt, so daß der Wassergehalt des bei der ersten Extraktion verwendeten Gemisches 40 bis 70 %, der Wassergehalt des bei der zweiten Extraktion verwendeten Gemisches 20 bis 40 % und der Wassergehalt des bei der dritten Extraktion verwendeten Gemisches 5 bis 15 % beträgt.

In einer weiteren bevorzugten Ausführungsform kann die Extraktion kontinuierlich durchgeführt werden, besonders bevorzugt ist die Gegenstromextraktion. Erfindungsgemäß bevorzugte Extraktionsvorrichtungen sind Perkolatoren, Bandextraktoren, Rotationsextraktoren und vergleichbar kontinuierlich arbeitende Apparaturen.

In einer besonders bevorzugten Ausführungsform werden der aus a) Wasser und b) Alkanol und/oder Aceton bestehenden Extraktionsflüssigkeit geringe Mengen (bis zu 1 %) eines Reduktionsmittels zugesetzt. Solche reduzierend wirkenden Mittel sind beispielsweise Dithionite, Sulfite, Ascorbinsäure und andere.

In einer weiteren bevorzugten Ausführungsform werden der Extraktionsflüssigkeit geringe Mengen eines löslichen, basisch reagierenden Stoffes zugesetzt. Als basisch reagie rende Stoffe können Substanzen wie Alkalicarbonate, Natronlauge, Kalilauge oder Ammoniak eingesetzt werden.

Durch die genannten Zusätze wird erreicht, daß Begleitstoffe in leichter lösliche Formen überführt werden und das gewünschte Endprodukt in reinerer Form erhalten wird.

Bevorzugt durchgeführt wird das erfindungsgemäße Verfahren bei leicht erhöhten Temperaturen, die im allgemeinen zwischen 25 ° und 35 °C und besonders bevorzugt etwa 30 °C betragen.

Nach dem erfindungsgemäßen Extraktionsverfahren wird das Cassia-Endosperm-Mehl durch Filtration oder durch Zentrifugieren abgetrennt und anschließend schonend getrocknet. Durch das erfindungsgemäße Verfahren wird ein Produkt hergestellt, das die gewünschten Eigenschaften, nämlich Farblosigkeit, Geschmacks-und Geruchsneutralität aufweist, wobei das Verfahren als gesundheitlich unbedenklich zu bewerten ist, was besonders bei Zusatzstoffen zu Nahrungsmitteln eine wesentliche Rolle spielen kann.

Überraschenderweise wurde festgestellt, daß das mit dem erfindungsgemäßen Verfahren hergestellte Cassia-Endosperm-Mehl nicht nur die ursprünglich vorhandenen vorteilhaften Eigenschaften, wie hohe synergistische · Gelierfähigkeit mit Carrageenan, Xanthan und/oder Polyacrylaten beibehalten hat, sondern daß auch die Gelkraft durch die Behandlung mit dem erfindungsgemäßen Verfahren erhöht wurde.

Im Rahmen der vorliegenden Erfindung wurde für die Gelmessungen der F.I.R.A. Jelly Tester [*] /benutzt. Dieser F.I.R.A. Jelly Tester besteht im wesentlichen aus einem schmalen Metallblatt, das auf einen Schaft montiert ist. der eine genaue und leicht ablesbare, von -10 bis +90 Winkelgrad kalibrierte Skala trägt. Beim Auftreten einer Torsionskraft ist die ganze Einrichtung rotierbar; die Torsionskraft wird durch fließendes Wasser erzeugt, das mit einer vorgegebenen Geschwindigkeitsrate in einen kleinen, mit Gegengewicht versehenen Behälter, der über eine Zugvorrichtung mit dem Schaft verbunden ist, läuft. Die Gelstärke wird nun gemessen, indem man das Metallblatt in das Gel eintaucht und solange Wasser in den kleinen Behälter fließen läßt, bis das Metallblatt um einen bestimmten Winkel rotiert. Je höher nun die zum Erreichen des vorgegebenen Deformationswinkels benötigte Wassermenge ist, desto höher ist die Gelstärke. In den angeführten Beispielen beträgt der Deformationswinkel 30 ° und die zur Erzielung dieses Deformationswinkels benötigte Wassermenge wird in ml (entspricht g) angegeben.

Bei der Messung der Gelkraft des erfindungsgemäß erhaltenen Cassia-Endosperm-Mehls wurden 1:1 Mischungen aus Cassia-Endosperm-Mehl und kommerziell erhältlichem Kappa-Carrageenan hergestellt. Von diesen Geliermischungen wurden jeweils sechs Teile in 1000 Teile Wasser bei Raum temperatur mit einem Schnellrührer eingerührt. Anschließend wurde die Mischung im Becherglas unter leichtem Rühren auf 85 °C fünf Minuten lang erhitzt und der beim Erhitzen entstandene Wasserverlust kurz vor dem Abkühlen durch Hinzufügen von heißem Wasser wieder ausgeglichen. Die noch heißen, leicht viskosen Lösungen wurden in die zum F.I.R.A. Jelly Tester gehörenden Meßbecher gegossen. Nach dem Abkühlen auf 20 °C im Thermostaten wurden am nächsten Tag die Gelstärken in Form der Anzahl an ml (entspricht g) Wasser gemessen, die notwendig waren, die Skala am Testgerät um 30 ° auszulenken.

[*] H.A. Gaydon & Co. Ltd., Wallington, Surrey, England zitiert in Martin Glicksman: "Gum Technology in the Food Industry", Academic Press, New York, San Francisco, London (1969) 82

Bei dem für die Beispiele verwendeten Ausgangsmaterial handelte es sich um Cassia-Endosperm-Mehl von gelblicher bis brauner Farbe mit fruchtigem Geruch und bitterem Geschmack. Die Gelkraft betrug 80 g (Methode F.I.R.A. Jelly Tester 1:1 mit Carrageenan (0,6 %)).

Die Erhöhung der synergistischen Gelkraft des erfindungsgemäßen Cassia-Endosperm-Mehles stellt für die Anwendbarkeit des erfindungsgemäßen Produktes einen wesentlichen Vorteil dar, da hierdurch ein Geliermittel in qualitativ hochwertige Nahrungsmittel eingearbeitet werden kann, das gegenüber bereits bekannten Produkten den Vorteil einer erhöhten Wirksamkeit aufweist, was gerade bei der Verwendung in der Lebensmitteltechnologie erwünscht ist.

Beispiel 1:

In einem Isopropanol/Wassergemisch, bestehend aus

4 000 Teilen Isopropanol
5 000 Wasser      wurden
900 Teile Cassia-Endosperm-Mehl

suspendiert und bei Raumtemperatur 30 Minuten gerührt. Anschließend wurde abfiltriert, der Filterkuchen im Trockenschrank bei 100°C auf eine Restfeuchtigkeit von 8 % getrocknet. Das so gewonnene Cassia-Endosperm-Mehl war von heller Farbe, neutralem Geruch und verbessertem Geschmack. Die Gelkraft betrug 90 g.

Beispeil 2:

In einem Isopropanol/Wassergemisch, bestehend aus

4 000 Teilen Isopropanol
5 000 Teilen Wasser      wurden
1 500 Teile Cassia-Endosperm-Mehl

suspendiert und bei 30°C 30 Minuten gerührt. Anschließend wurde abfiltriert bis 8 000 Teile Filtrat aufgefangen waren. Der noch feuchte Filterkuchen wurde erneut in einem Isopropanol/Wassergemisch, bestehend aus 3 500 Teilen Isopropanol und 1 500 Teilen Wasser suspendiert und 30 Minuten bei 30°C gerührt. Es wurde abfiltriert und auf eine Restfeuchtigkeit von 8 % getrocknet. Das so gewonnene Cassia-Endosperm-Mehl war praktisch farblos und von neutralem Geruch und Geschmack. Die Gelkraft betrug 95 g.

Beispiel 3:

In einem Ethanol/Wassergemisch, bestehend aus

4 000 Teilen Ethanol
5 000 Teilen Wasser      wurden
1 000 Teile Cassia-Endosperm-Mehl

suspendiert. Anschließend wurden 2 Teile Natriumdithionit und 1 Teil Kaliumcarbonat zugegeben und 30 Minuten bei 30°C gerührt. Es wurde abfiltriert bis die Menge des aufgefangenen Filtrats 8 500 Teile betrug. Der feuchte Filterkuchen wurde in einem Ethanol/Wassergemisch, bestehend aus 3 500 Teilen Ethanol und 1 500 Teilen Wasser suspendiert und nach 30 Minuten Rühren erneut abfiltriert bis die Menge des aufgefangenen Filtrats 4 600 Teile betrug. Der Filterkuchen wurde in einem weiteren Ethanol/Wassergemisch, bestehend aus 1 800 Teilen Ethanol und 200 Teilen Wasser suspendiert und nach 30 Minuten Rühren bei Raumtemperatur abfiltriert bis die Filtratmenge 2000 Teile betrug. Der Filterkuchen wurde auf eine Restfeuchtigkeit von 8 % getrocknet. Das so gewonnene Cassia-Endosperm-Mehl war praktisch farblos und von neutralem Geruch und Geschmack. Die von mehreren Personen durchgeführte Degustation ergab eine sehr gute, positive Beurteilung. Die Gelkraft betrug 100 g.

Beispiel 4:

In einem Aceton/Wassergemisch, bestehend aus

4 000 Teilen Aceton
5 000 Teilen Wasser      wurden
1 500 Teile Cassia-Endosperm-Mehl

suspendiert und bei 30°C 30 Minuten gerührt. Anschließend wurde abfiltriert bis 8 000 Teile Filtrat aufgefangen waren.

Der noch feuchte Filterkuchen wurde erneut in einem Aceton/Wassergemisch, bestehend aus 3 500 Teilen Aceton und 1 500 Teilen Wasser suspendiert und 30 Minuten bei 30°C gerührt. Es wurde abfiltriert und auf eine Restfeuchtigkeit von 8 % getrocknet. Das nach Beispiel 4 gewonnene Cassia-Endosperm-Mehl war praktisch farblos mit neutralem Geruch und neutralem, angenehmem Geschmack. Die Gelkraft betrug 101 g.

Beispiel 5:

In einem Gegenstrom-Extraktionssystem aus 3 in Reihe geschalteten Perkolatoren wurden 3 × 1 000 Teile Cassia-Endosperm-Mehl kontinuierlich mit einem Isopropanol/Wassergemisch (50 Vol%) mit einer Durchflußgeschwindigkeit von 3 000 Teilen pro Stunde eluiert. Jede Stunde wurde der erstgeschaltete Perkolator entleert, neugefüllt und zuletztgeschaltet. Das noch feuchte Cassia-Endosperm-Mehl wurde von Isopropanol befreit und auf einen Restwassergehalt von 8 % getrocknet. Das so gewonnene Cassia-Endosperm-Mehl ist von heller Farbe und geruchs-und geschmacksneutral. Die Gelkraft betrug 91 g.

Beispiel 6:

In einem Apparat zur Zerkleinerung von Feststoffen bei gleichzeitiger Anwesenheit von Flüssigkeit wurden 1 000 Teile Cassia-Endosperm-Splits unter Zuspeisung eines Isopropanol/Wassergemisches (50%) wiederholt durch die Zerkleinerungszone passiert, ausgetragen und von Isopropanol befreit. Die anschließende Trocknung auf 8 % Restwassergehalt ergab ein keimfreies Cassia-Endosperm-Mehl von heller Farbe, neutralem Geruch und angenehmem Geschmack. Die Gelkraft betrug 91 g.

**Ansprüche**

1. Verfahren zur Herstellung eines Cassia-Endosperm-Mehls aus dem Endosperm von Cassia tora/syn. obtusifolia, von hoher synergistischer Gelierfähigkeit mit Carrageenan, Xanthan und/oder Polyacrylaten, das praktisch farblos, geruchs-und geschmacksneutral ist, dadurch gekennzeichnet, daß man das Endosperm entweder ganz oder in zerkleinertem Zustand mit einem Gemisch aus a) Wasser und b) Alkanol und/oder Aceton mindestens einmal extrahiert und nach Trocknung auf die gewünschte Feinheit einstellt.

2. Verfahren nach Anspruch 1, dadurch gekennzeichnet, daß man das Endosperm mehrfach extrahiert und daß man den Wassergehalt des Extraktionsgemischs im Verlauf der Extraktion sukzessive absenkt.

3. Verfahren nach Anspruch 2, dadurch gekennzeichnet, daß das Extraktionsgemisch bei der ersten Extraktion einen Wassergehalt von 40 bis 70 % und bei der zweiten Extraktion einen Wassergehalt von 20 bis 40 % aufweist.

4. Verfahren nach Anspruch 2, dadurch gekennzeichnet, daß das Extraktionsgemisch bei der ersten Extraktion einen Wassergehalt von 40 bis 70 % und bei der zweiten Extraktion einen Wassergehalt von 20 bis 40 % und bei der dritten Extraktion einen Wassergehalt von 5 bis 15 % aufweist.

5. Verfahren nach Anspruch 1 oder 2, dadurch gekennzeichnet, daß die Extraktion kontinuierlich durchgeführt wird.

6. Verfahren nach Anspruch 1 oder 2, dadurch gekennzeichnet, daß die Extraktion im Gegenstrom durchgeführt wird.

7. Verfahren nach einem der vorhergehenden Ansprüche, dadurch gekennzeichnet, daß die Extraktion bei erhöhter Temperatur durchgeführt wird.

8. Verfahren nach einem der vorhergehenden Ansprüche, dadurch gekennzeichnet, daß das Extraktionsgemisch ein reduzierend wirkendes Mittel und/oder einen löslichen, basisch reagierenden Stoff enthält.